# EUROPEAN PATENT SPECIFICATION

(11) **EP 1 595 190 B1**
(45) Date of publication and mention of the grant of the patent: **27.09.2006**
(21) Application number: 03708122.1
(22) Date of filing: 21.02.2003
(51) Int. Cl.: G06F 1/00, H04L 29/06

(54) **SERVICE PROVIDER ANONYMIZATION IN A SINGLE SIGN-ON SYSTEM**
DIENSTANBIETERANONYMISIERUNG IN EINEM SINGLE SIGN-ON SYSTEM
ANONYMISATION DE FOURNISSEURS DE SERVICES DANS UN SYSTEME D'OUVERTURE DE SESSION UNIQUE

(43) Date of publication of application: 16.11.2005
(73) Proprietor: TELEFONAKTIEBOLAGET LM ERICSSON (publ), 164 83 Stockholm (SE)
(72) Inventor: BUSBOOM, Axel, 91364 Unterleinleiter (DE)
(74) Representative: Pfeifer, Torsten
(86) International application number: PCT/EP2003/001805
(87) International publication number: WO 2004/075035

(56) References cited:
- US-A- 6 161 139
- US-B1- 6 421 768
- INTERNET JUNKBUSTERS FREQUENTLY ASKED QUESTIONS, [Online] 23 October 2002 (2002-10-23), XP002245930 Retrieved from the Internet: <URL:http://www.junkbusters.com/ijbfaq.htm l> [retrieved on 2003-06-30]
- FIELDING R ET AL: "RFC 2616: Hypertext Transfer Protocol -- HTTP/1.1" INTERNET ENGINEERING TASK FORCE (IETF), REQUEST FOR COMMENTS (RFC), June 1999 (1999-06), XP002196143 Retrieved from the Internet: <URL:http://www.rfc-editor-org/> [retrieved on 2002-04-15]
- "Liberty Architecture Overview, Version 1.1" LIBERTY ALLIANCE PROJECT, [Online] 15 January 2003 (2003-01-15), XP002246163 Piscataway, NJ Retrieved from the Internet: <URL:http://projectliberty.org/specs/archi ve/v1_1/liberty-architecture-overview-v1.1 .pdf> [retrieved on 2003-07-02]
- "Liberty Bindings and Profiles Specification, Version 1.1" LIBERTY ALLIANCE PROJECT, [Online] 15 January 2003 (2003-01-15), XP002246164 Piscataway, NJ Retrieved from the Internet: <URL:http://www.projectliberty.org/specs/a rchive/v1_1/liberty-architecture-bindings- profiles-v1.1.pdf> [retrieved on 2003-07-02]
- "Liberty Protocols and Schema Specification, Version 1.1" LIBERTY ALLIANCE PROJECT, [Online] 15 January 2003 (2003-01-15), XP002246165 Piscataway, NJ Retrieved from the Internet: <URL:http://www.projectliberty.org/specs/a rchive/v1_1/liberty-architecture-protocols -schema-v1.1.pdf> [retrieved on 2003-07-02]

## Description

### Field of the Invention

The present invention relates to the area of sign-on methods and privacy enhancing technologies and communications environments using the same. In particular, the present invention relates to sign-on and single sign-on methods wherein data identifying an entity from which service is requested is forwarded to an authentication entity in a blinded manner.

### Background of the Invention

In order to promote the reading of the description, terminologies and abbreviations being defined in the glossary at the end will be used.

For single sign-on (SSO), the management and authentication of service requesting entities is done by one or more authentication entities referred to as Identity Providers (IdPs) which are separated from the services providing entities referred to as Service Providers (SPs) that, e.g., operate web sites or other services. This separation has a number of advantages, the most important one being that a user no longer needs to remember multiple usernames and passwords for multiple services or, even worse, reuse passwords and thus compromise their security. As illustrative example of a SSO providing technology, it will be referred to the Liberty Alliance Project (LAP). In particular, reference is made to the version 1.0 specifications of LAP (Liberty Alliance Project:"Liberty Protocols and Schemas Specification", Version 1.0, 11 July 2002; published on 15 July 2002; "Liberty Bindings and Profiles Specification", Version 1.0, 11 July 2002, published on 15 July 2002; "Liberty Architecture Overview", Version 1.0, 11 July 2002, published on 15 July 2002).

Therefore, no comprehensive introduction and technical background will be given here. Rather, it will be assumed that the basic mechanisms of SSO as well as the LAP 1.0 specifications are known.

It is assumed that a principal has already established an identity IdP-ID at its identity provider IdP and a different identity SP-ID at each service provider SP that the principal at least intends to communicate with. It is desired that - when migrating to a single sign-on system, e.g., LAP - the principal can link all his existing accounts to service providers to a single "federated identity", rather than having to re-establish all relations to service providers over again. This procedure is commonly referred to as account linking and known which is why further explanations are refrained from.

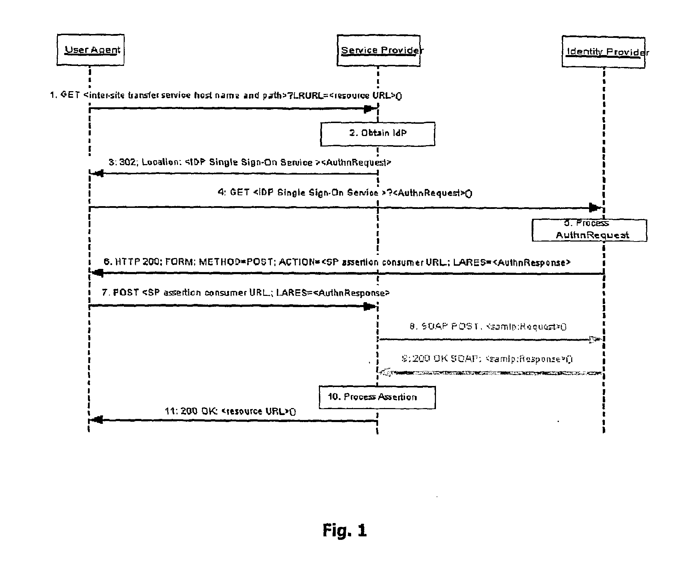

In case the principal's accounts at the identity provider IdP and service provider SP have already been linked (i.e. that a pseudonym has already been established between the identity provider IdP and the service provider SP for indicating the principal), then the single sign-on procedure consists of the steps illustrated in Fig. 1. Here it is noted that, as a matter of fact, LAP 1.0 uses not only a single pseudonym for each principal between each IdP and each SP, but two of them: One (the "IDPProvidedNameIdentifier") is generated by the IdP and the other (the "SPProvidedNameIdentifier") is generated by the SP. In the following, this fact will be neglected because it does only adds complexity without changing anything conceptually. Therefore, the notion of a single ALIAS-ID will be used, even though in fact this may consist of two distinct pseudonyms.

A principal sends, via a client here referred to as user agent, a service request (e.g. an HTTP Request) to the service provider SP (step 1).

Service provider SP decides by out-of-band means (e.g. by querying the user) which identity provider IdP to use for this particular sign-on procedure (step 2).

Service provider SP sends an authentication request to the identity provider IdP, via the client or user agent (step 3,4).

Identity provider IdP authenticates the principal by out-of-band means, e.g. by asking for a username and password and by verifying these (step 5).

Identity provider IdP sends an authentication response to the service provider SP in which it asserts (by means of a digital signature) the principal's identity (steps 6,7). Assuming the two accounts have been previously linked (federated), the identity provider IdP uses the ALIAS-ID established between the identity provider IdP and the service provider SP. By means of, e.g., a table lookup or database query the ALIAS-ID to use for the given IdP-ID (as determined in step 5) and the given service provider SP (by the name of SP-Name which must have been specified in the request steps 3, 4) can be obtained.

Optionally, e.g., in case single sign-on systems that use a SAML artifact, the service provider SP and the Identity Provider IdP can exchange HTTP Requests and Responses to identify data portions not actually necessary for authentication (step 8 and 9).

Service provider SP processes the assertion (step 10) and maps the ALIAS-ID to the SP-ID, e.g. by means of a table lookup or database query.

Service provider SP provides the requested service to the principal (step 11) if the authentication response received from the identity provider IdP meets the criteria of the service provider SP.

Now, it is assumed that no previous account linking has taken place, and that identity federation is desired, i.e. once a principal authenticates at service provider SP via identity provider IdP for the first time, existing accounts of the principal should be federated. In this case, a flag in the authentication request (step 3, 4) could be used to indicate that account linking is desired. In case of LAP, a so-called "Federate" flag in the authentication request (step 3, 4) would indicate account linking. Up to and including step 5, this scenario is comparable to the preceding one.

Before sending the authentication response (step 6,7), the identity provider IdP creates a new name identifier ALIAS-ID for the principal since none has been previously established.

The identity provider IdP inserts an entry into its table or database such that, when communicating with service provider SP in the future, the same ALIAS-ID will be used for the same principal (identified by IdP-ID).

In step 10, the service provider SP will receive the newly created ALIAS-ID, but it does not yet know which principal it pertains to. Therefore, it will have to locally identify and probably authenticate the principal in order to complete the account federation. If an authentication assertion from the identity provider IdP for a principal is received for the first time by service provider SP for that principal, local identification and authentication can be based on, e.g., requesting a username and password from the principal. Thus, the service provider SP can determine the principal's SP-ID. Then, the service provider SP adds the association between the ALIAS-ID and the SP-ID to its table or database. The next time service provider SP will receive an authentication assertion from the identity provider IdP with identity ALIAS-ID for that principal, it will know (from a database lookup) that the principal is SP-ID without the need for re-authentication.

In known SSO approaches, such as LAP 1.0, the identity provider IdP has a table or database describing the relationships between all principals and SPs, i.e. the identity provider IdP knows which services each principal is accessing, and when. This is problematic both from the users' and from the SPs' point of view:

A user may be concerned that a single entity, i.e. the identity provider IdP, collects too much information about the user. The user's personal data together with an exhaustive list showing which websites the user is visiting and allowing conclusions about user's interests and consumer behavior has a substantial economic value. The temptation to sell this information and/or to use it for other purposes than the intended one (single sign-on provisioning) is large.

The service provider SP's customer database is one of its key assets, and few businesses would be willing to share this with another entity, e.g. the identity provider.

It is further desired that any service provider cannot infer from the knowledge of a principal's SP-ID the IdP-ID of the same principal at the identity provider IdP or the SP-ID of the same principal at other service providers. Likewise, the identity provider IdP should not be able to infer any SP-IDs of the principal from the knowledge of the principal's IdP-ID.

US 6161139 refers to a method and apparatus for controlling access to protected information resources. In particular, a user not being authenticated so far but requesting access to a protected resource of a protected server is redirected by the protected server to a log-in Unified Resource Locator (URL) associated to an access server. For that purpose, a Hypertext Transfer Protocol (HTTP) redirect is used.

Document "Internet Junkbusters Frequently Asked Questions" of 23 October 2002 refers to a software tool that deletes identifying header information that is exchanged between web servers and browsers. For HTTP headers in requests to servers the software tool can in particular delete a so-called "referrer" header indicating where the URL currently being requested was found. Alternatively, a bogus header may be added which is the same for every HTTP request.

### Object of the Invention

The object of the present invention is to provide solutions for the above named privacy and data protection problems. In particular, the object of the present invention is to provide a method and a communications environment and components thereof, respectively, using the method which allow for a secure authentication of an entity in relation to an authentication requesting entity with at least reduced communication of entity identifying data.

### Short Description of the Invention

To solve the above object, the present invention provides a method for sign-on in a network based communications environment, wherein an authentication of a first entity is requested by a second entity for accessing a service to be provided by the second entity to the first entity, the authentication being provided by a third entity, wherein data identifying the second entity are blinded towards the third entity. As a benefit, the blinding of data identifying the second entity towards the third entity achieves that the third entity cannot infer the identity of the second entity on the basis of the blinded data. The first entity can for example be represented by a principal and a client, the second entity by a service provider and the third entity by an identity provider.

According to a preferred embodiment, the method according to the present invention is used for a single sign-on. Referring to the above description of single sign-on, e.g. in line with the LAP specifications, the present invention provides a method for blinding the identity of the service provider SP towards the identity provider IdP.

Blinding means that data identifying the second entity are modified such that the blinded data do not provide any information on the basis of which the second entity can be identified preferably except for the entity which has at least initiated data blinding, here the first entity. Examples for blinding include the use of a pseudonym or alias for the data identifying the second entity.

Data identifying the second entity can be a name, identification or the like of the second entity available for the first entity and, virtually, for any entity requesting service from the second entity. Examples for data identifying the second entity are the domain or host name of the second entity, in particular, if the second entity is a computer network based service provider.

Nevertheless, the third entity can use the blinded data as unique identifier for the second entity. If, for example, the third entity receives the same blinded data twice, the third entity cannot infer to which entity the blinded data refer to, but the third entity is able to know that these blinded data refer to the same entity.

In order to accommodate conventional network based services, the present invention contemplates that services provided by the second entity can require a respective service request from the first entity. Nevertheless, it is possible that for example on the basis of default settings regarding the first and second entities, a service of the second entity is assumed to be provided "automatically" to the first entity, e.g. upon establishing a communication link. These options are commonly known as "service pull" and "service push", respectively.

Comparable thereto, authentication of the first entity for actually providing and/or accessing a service of the second entity can be a pre-set or pre-defined requirement for any service related communications between the first and second entities. As an alternative, it is possible that the second entity generates, if applicable in response to the service request, a first authentication request and communicates the same to the first entity, wherein the first authentication request is relatable by the first entity to the second entity. Such an authentication request can include a so-called trusted group identifier, which indicates that the second entity belongs to a group of trusted entities. Such trusted group identifier can be a group signature or any other identifier, which proves towards the third entity that the second entity belongs to a circle of trust. In case, authentication of the first entity does not require an authentication request by the second entity, the trusted group identifier can be communicated alone. However, it is intended that a trusted group identifier does not reveal the identity of the second entity.

In the case the first entity is not in a possession of data identifying the second entity, such data can be obtained by the first entity. For example, the first entity can use, if applicable, the first authentication request to extract data identifying the second entity.

Further, examples include obtaining data identifying the second entity from communications between first and second entities, such as a HTTP-Get or SOAP-messages received from the second entity.

Preferably, blinding the data identifying the second entity is performed by the first entity itself. As an alternative, blinding the data identifying the second entity can be performed by a further entity which provides information correlating the unmodified data identifying the second entity and respective blinding data only to the first entity. For blinding data identifying the second entity a memory, such as a look-up table associated to the entity performing the data blinding and/or cryptographic techniques can be used. In case of a memory used for blinding data identifying the second entity, the first entity retrieves in dependence of the unmodified data identifying the second entity respective blinded data. In addition, it is possible that blinded data for data identifying the second entity are retrieved in further dependence from data utilized by the third entity to identify the first entity. If a memory used by the first entity for data blinding does not include blinded data for data identifying the second entity, the first entity will generate respective blinded data. In case of cryptographic techniques used for data blinding, a permanently stored secret key can be used for encrypting data identifying the second entity.

In order to inform the third entity that authentication is requested, the first entity can generate an authentication request. If the first entity has received an authentication request by the second entity as set forth above, the authentication request from the first entity will be referred to as the second authentication request. Here, the method according to the present invention preferably comprises the step of obtaining data identifying the third identity and communicating a second authentication request from the first entity to the third entity, wherein the second authentication request includes or is accompanied by the blinded data and a data identifying the first entity towards the third entity. For generating its authentication request, the first entity utilizes the blinded data, which can form a part of the second authentication request or which can be associated thereto. For communicating the second authentication request from the first entity to the third entity, data characterizing the third entity are used. To obtain such data, which preferably identify the third entity in an unambiguous manner, suitable data can be communicated from the second entity to the first entity, for example by means of the first authentication request. In addition thereto or as an alternative, it is possible to obtain data characterizing the third entity from a memory associated to the first entity or to input respective data by a user representing a user's selection of an entity as third entity.

Preferably, the data identifying the first entity towards the third entity is or is accompanied by a second trusted group identifier, which indicates a group of trusted entities the first entity belongs to.

Preferably, the second authentication request comprises or is accompanied by the first trusted group identifier.

Further, it is preferred that the method comprises the step of authenticating the first entity by the third entity by using at least the data identifying the first entity towards the third entity.

Further, preferably the method comprises the step of authenticating the first entity by the third entity by using at least the second trusted group identifier.

Further, it is preferred that the method comprised the step of authenticating the second entity by the third entity by using the first trusted group identifier.

In response to the second authentication request, the third entity can identify the first entity by the provided data identifying the first entity towards the third entity, e.g. by checking if a corresponding entry in the database accessible to the third entity is found. If no entry is found, the third entity may ask the first entity to register to the authentication service provider by the third entity or may terminate the procedure. If an entry is found or in conjunction with the registration, the third entity may authenticate the first entity, e.g. by requesting and verifying a user name and password from the first entity.

If the data identifying the first entity towards the third entity is or is accompanied by a (second) trusted group identifier indicating that the first entity belongs to a group of trusted entities, the third entity may identify the first entity belonging to a group of trusted entities. The usage of the second trusted group identifier enables the third entity to achieve an implicit authentication of the first entity, i.e. the third entity can verify that the first entity belongs to a circle of trust thus meeting a possible criteria of the third entity for authentication. In addition it may provide that an additional explicit authentication (e.g. as describe above for a user name/password mechanism) requiring additional communication with the first entity can be omitted.

In a similar manner, the second entity may be authenticated if the second authentication request is accompanied by the first trusted group identifier. However, in this case no identification of the second entity is possible for the third entity.

Further, it is preferred that the method comprises the step of obtaining by the third entity, in response to the second authentication request, data identifying the first entity towards the second entity by utilizing the blinded data and the data identifying the first entity towards the third entity.

If the authentication of the first entity by the third entity is successful and, if applicable, the authentication of the second entity by the third entity is also successful, the third entity generates a first authentication response. Here, it is preferred to communicate a first authentication response from the third entity to the first entity, wherein the first authentication response, wherein the first authentication response comprises or is accompanied by at least the data characterizing the first entity towards the second entity

In the case of enhanced security, data protection and privacy requirements, the third entity can sign the first authentication response with a signature for authentication of the third entity towards the second entity.

In order to enable the first entity to correlate the first authentication response received from the third entity to the authentication request and thus to the second entity, suitable data may be included into the first authentication request and the first authentication response. A first example for suitable data is a session identifier on the basis of which the first entity can link the authentication response to its authentication request. A further example is the blinded data itself, that when provided in conjunction with the first authentication response can enable the first entity to execute an unblinding of the blinded data such revealing the data identifying the second entity. The first entity can forward its authentication by communicating a second authentication response to the second entity. The second authentication response comprises or is accompanied by the data characterizing the first entity towards the second entity. The characterizing data can be used by the second entity to associate the second authentication response to the first entity.

Authentication of the first entity is successful if the second entity accepts the second authentication response or the authentication provided therewith meets criteria of the second entity. Then, the second entity can communicate a service response to the first entity indicating that the requested service is now available and can be accessed.

Such a service response can be omitted if, for example, providing and/or accessing the requested service is at least initially allowed and only interrupted if a negative service response is communicated from the second entity to the first entity in case authentication of the first entity fails.

Here or before communication of the service response, it is possible that the second entity requests or requires an identification of the first entity, as information in addition to the authentication of the first entity. This can be accomplished by the second entity via obtaining data identifying the first entity towards the second entity, e.g. by respective data communication therefrom, such as passwords and user names.

According to a preferred embodiment, the first entity is a computer based end user unit such as a personal computer or a mobile telephone, the second entity is a computer network based service provider such as an Internet service provider and the third entity is an identity provider, an authentication trust center, an Internet service provider or a mobile network operator. In a further preferred embodiment, the method according to the present invention relies, at least partially, on the specifications of LAP.

According to a further preferred embodiment, the first entity can be represented by a principal for identification and/or authentication purpose at the respective entities (e.g. SP, IdP) receiving data (e.g. IdP-ID, SP-ID, ALIAS-ID) identifying or characterizing the first entity towards the respective receiving entities and by a client for communication and data processing (e.g. blinding) purpose as far as related to the fist entity.

Further, to solve the above object, the present invention provides a communications environment, entities and a - preferably stored on a computer readable storage medium or in a computer readable storage unit- computer program product as defined in the further claims.

### Short Description of the Figures

In the following description of preferred embodiments it is referred to the accompanying figures, wherein:
- Fig. 1: illustrates a message flow for a single sign-on procedure according to LAP specifications,
- Fig. 2: illustrates a message flow for a single sign-on procedure according to the present invention,
- Fig. 3: illustrates a further message flow for a single sign-on procedure according to the present invention,
- Fig. 4: illustrates mapping of data at the service provider according to the present invention,
- Fig. 5: illustrates mapping of data at the client according to the present invention, and
- Fig. 6: illustrates mapping of data at the identity provider according to the present invention.

### Description of Preferred Embodiments

For description of preferred embodiments, without intending any limitation of the present invention, reference will be made to the LAP specifications in order to promote an understanding of the present invention. Therefore, abbreviations used in the following are defined above or can be found in the LAP references named at the beginning.

According to the method for service provider anonymization in single sign-on procedures, the client blinds the name or identifier SP-Name of the service provider SP by using a pseudonym or alias SP-PN when communicating with the identity provider IdP. The client preferably uses the same SP-PN for the same service provider SP. The SP-PN should be chosen in such a way that it allows no linkage to the identity, e.g. real name (SP-Name), of the service provider SP to the SP alias SP-PN. The message exchange for authentication is done in such a way ("front-channel") that no direct message exchange between the service provider SP and identity provider IdP takes place, in order for the identity provider IdP not to be able to identify the service provider SP.

Preferably, the blinding is also dependent on the IdP-ID that the user chooses when identifying towards the identity provider IdP. This provides some advantages. For example a user might choose to use different identities with the same identity provider IdP or with different IdPs, e.g. for business use, private, personal, etc. If the SP-PN were independent of the IdP-ID, then the identity provider IdP might be able to link the different authentications - using different IdP-IDs - from the fact that the same SP-PN is being used. IdP-ID dependent blinding avoids such problems. Further, if different users share the same end user unit but use different identities, the same problem could occur.

### Blinding can be done in one of the following exemplary ways:

According to the first example for blinding, the client creates a memory (e.g. in form of a table or database) whereas each entry contains the three fields SP-Name, IdP-ID and SP-PN. Whenever a mapping from an SP-PN and an IdP-ID to an SP-PN needs to be done, the client queries the table for an entry containing the given SP-Name and IdP-ID. If an entry is found, the corresponding SP-PN is returned. Otherwise, a new SP-PN is created (e.g. pseudo randomly) and a new entry in the table or database is created containing the given SP-Name, the IdP-ID and the newly created SP-PN.

According to a second example for blinding, the client initially obtains a secret key (e.g. by use of a pseudo-random generator or alternatively a fixed key that is stored in a smart card upon manufacturing) and stores it in such a way that it is protected against unauthorized access. For each given SP-Name, the client applies an encryption algorithm to SP-Name and IdP-ID using the permanent secret key for achieving the resulting SP-PN. The used encryption algorithm should preferably be secure against known plaintext attacks as well as against chosen plaintext attacks.

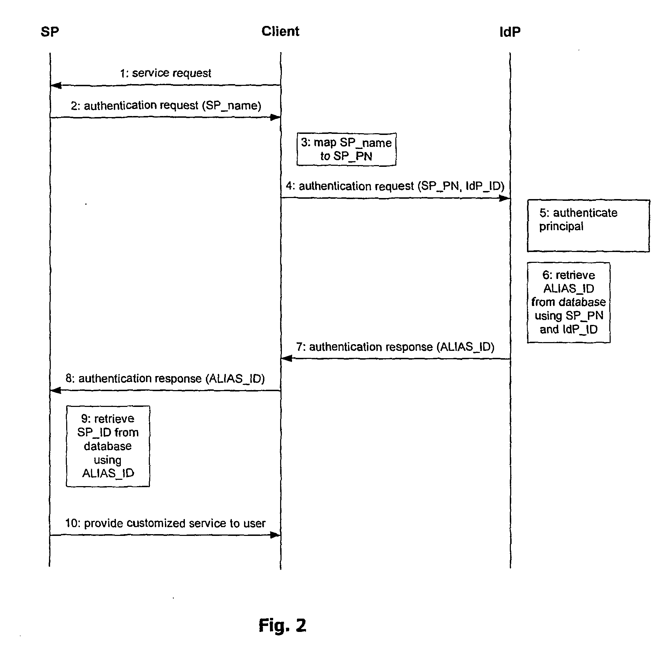

Referring to Fig. 2, a situation will be described where account linking as known in the art, e.g. from LAP, between the service provider SP and the identity provider IdP for the principal has already taken place:

The client requests access to a service from the service provider SP (step 1).

The service provider SP asks for principal authentication by sending an authentication request to the client. The authentication request can indicate the SP-Name (step 2).

The client maps the real name SP-Name of the service provider SP (e.g. service1.com) and preferably the IdP-ID to an alias SP-PN, according to one of the two methods described above (step 3).

The client requests from the identity provider IdP to be authenticated (step 4). The authentication request contains the alias SP-PN of the service provider SP for which the client is requesting authentication. The request also contains the IdP-ID under which the principal is known by the identity provider IdP.

The identity provider IdP identifies and authenticates the principal as IdP-ID (step 5). This typically involves the verification of credentials, such as a password, secret key, or other.

Then the identity provider IdP retrieves the ALIAS-ID for the principal from a database, to be used with the service provider SP known under the alias SP-PN (step 6). A suitable database includes entries of IdP-IDs, SP-PNs and ALIAS-IDs in a correlated manner such that the identity provider IdP knows which ALIAS-ID is to be used for or is associated to which combination of IdP-ID and SP-PN.

The identity provider IdP sends an authentication response comprising the ALIAS-ID to the client (step 7), e.g. a digitally signed assertion of the principal's authentication.

The client then forwards the authentication response to the service provider SP (step 8).

The service provider SP then verifies the authentication response and retrieves the SP-ID from its database that corresponds to the ALIAS-ID in the authentication response (step 9).

Finally, the service provider SP starts providing the requested (and potentially customized) service to the client (step 10). From the knowledge of the SP-ID, the service may customized.

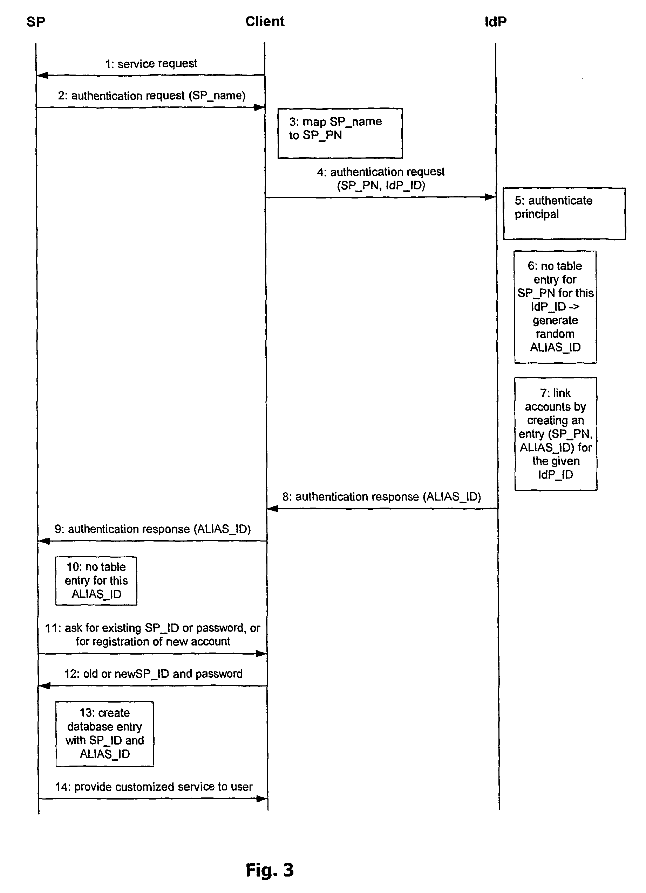

Fig. 3 shows a message flow for the case that no account linking has previously taken place, but that it is desired (e.g. flag "Federate" has the value "true" in LAP 1.0 authentication request).

Steps 1 to 5 can be identical to the case described above.

In step 6 the identity provider IdP does not find an entry for the given IdP-ID and SP-PN. It therefore obtains, e.g. by generating, a new ALIAS-ID (random or preferably unlinkable to IdP-ID or other personal user data) and adds an entry (IdP-ID, SP-PN, ALIAS-ID) to its memory (step 7) thus achieving the IdP related part of the account linking.

The identity provider IdP sends the authentication response comprising the ALIAS-ID and the assertion to the client (step 8), which forwards the authentication response to the service provider SP (step 9).

In step 10 the service provider SP is not able to find an entry for the ALIAS-ID (newly generated by the identity provider IdP) in its database, i.e. it cannot associate the received authentication with any known principal SP-ID. Therefore, it determines the principal identity, e.g. by querying the principal for a username (=SP-ID) and password. Alternatively, if the principal does not have an existing account with the service provider SP, the principal could be asked to register for a new account. The service provider SP creates a new entry in its database with the principal's SP-ID and the ALIAS-ID received from the identity provider IdP (step 13).

Preferably, a new entry in the database of the service provider SP would be of the form (SP-ID, IdP-Name, ALIAS-ID) where IdP-Name is a unique name identifying the identity provider IdP. The reason is that it would typically not be guaranteed that ALIAS-IDs created by different IdPs are unique across an entire federation or "circle of trust". Therefore, if the IdP-Name is not in the database entry, unique mapping from an ALIAS-ID to an SP-ID would not be guaranteed.

Finally, as above the service provider SP starts providing the requested customized services to the client (step 14). The next time the principal logs in to this service, the SSO service provided by the identity provider IdP will be recognized and no user-name/password will need to be provided to the service provider SP (see Fig. 2), i.e. once the account linking is achieved according to Fig. 3, the SSO can be achieved according to the method described with reference to Fig.2.

In the following, mappings between different data that need to be performed by the involved entities and data structures (tables) employed are illustrated as examples.

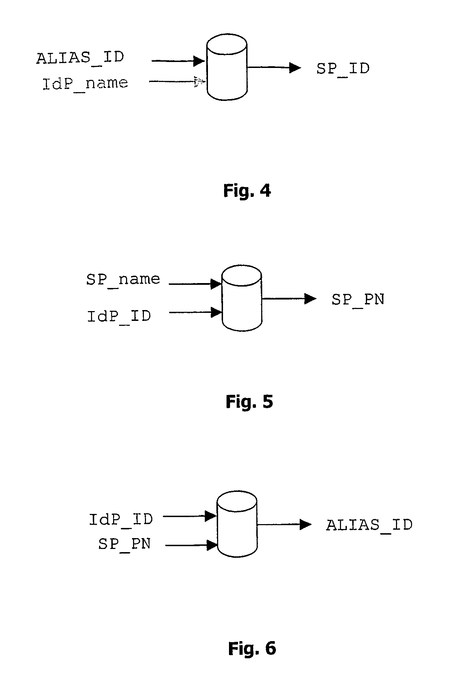

According to Fig. 4, the service provider (SP) maps an ALIAS-ID (received from the identity provider IdP) to an SP-ID. Fig. 4 illustrates a mapping for the following table:

| ALIAS-ID | IdP-Name | SP-ID |
|---|---|---|
| uS6B5eNH89A0 | mno.com | alice |
| a5Db323425GB | mno.com | bobby |

As described above, the table can (but not necessarily) contain the IdP-Name as an additional field.

According to Fig. 5, the client obtains blinded data, e.g. by mapping an SP-Name and an IdP-ID to an SP-PN. As described above, this can be achieved by, e.g., using cryptographic techniques (encryption of SP-Name and IdP-ID) or by a table lookup. For the following table, Fig. 5 provides an illustration of a respective mapping:

| SP-Name | IdP-ID | SP-PN |
|---|---|---|
| service1.com | bob.smith@mno.com | k6TgF45u23Rp |
| service2.com | bob.smith@mno.com | 9KeB4UjL64S8 |

The identity provider (IdP) maps a given pair (IdP-ID, SP-PN) to an ALIAS-ID, which is illustrated in Fig. 6 for the following table:

| IdP-ID | SP-PN | ALIAS-ID |
|---|---|---|
| alice.miller@mno.com | nW3Zy8pK9Qjt | uS6B5eNH89A0 |
| alice.miller@mno.com | 6Hm8Se3Xn80P | Gn7Rtsd39Okd |
| bob.smith@mno.com | k6TgF45u23Rp | a5Db323425GB |
| bob.smith@mno.com | 9KeB4UjL64S8 | 8Yy1Ax5b8Nj3 |

A processing and flow of respective data according to the invenion may be described as follows:

The principal with the IdP-ID "bob.smith@mno.com" requests service from the SP with SP-Name "service1.com". For authentication of the principal at the IdP having IdP-Name "mno.com", the principal obtains the blinded data SP-PN "k6TgF45u23Rp" that can be e.g. found in its database correlated to the SP-Name "service1.com" and to the IdP-ID "bob.smith@mno.com". The SP-PN "k6TgF45u23Rp" and the IdP-ID "bob.smith@mno.com" are sent to the IdP. The IdP identifies the principal based on the IdP-ID "bob.smith@mno.com" and obtains the ALIAS-ID "a5Db323425GB" correlated to the respective IdP-ID bob.smith@mno.com" and SP-PN "k6TgF45u23Rp". The ALIAS-ID "a5Db323425GB" is sent to the client which forwards the ALIAS-ID "a5Db323425GB" to the SP "service1.com". The SP "service1.com" can obtain the identity of the principal, i.e. the SP-ID "bobby", based on the received ALIAS-ID "a5Db323425GB" from the database.

In the following, the description of operations/protocols of the three involved entities (SP, IdP, client) are described in greater detail, wherein references to LAP 1.0 are presented. Furthermore it should noted that in the following the terms client and principal are used synonymously.

### Service provider

The service provider SP receives a service request from the client for which authentication is necessary, e.g. an HTTP Get. Then, an authentication request is sent back to the client, similar to the procedure in LAP 1.0. Details of that procedure can differ depending on the profile in LAP 1.0. For example, an HTTP redirect or a SOAP message to the client can be used. Further, the authentication request may be signed using a trusted group identifier indicating that the service provider belongs to a group of trusted service providing entities.

Subsequently, the service provider SP waits to receive an authentication response from the client signed by a trusted identity provider IdP. For verification of the assertion, the service provider can, for example, check the signature of the identity provider IdP and the like. The authentication response asserts the client to be known under ALIAS-ID, for which it is checked whether a respective memory entry exists. As an option, an IdP-Name can be included in or associated to the ALIAS-ID for which respective memory entries can be checked.

In case of a memory entry, the service provider SP retrieves the respective SP-ID from the memory. Optionally, the service provider SP can further retrieve specific profile information for the client currently requesting a service, for example, a customized portal, access to bank account and the like.

If the memory associated to the service provider SP does not provide a memory entry for the current ALIAS-ID, the service provider SP can send, for example, an HTML form to the client requesting an existing user name and/or password. As an alternative, the service provider SP can request the client to register as new client. Having retrieved respective information (for example user name and/or password), the service provider SP creates a respective memory entry (ALIAS-ID, SP-ID, optionally IdP-Name) in its memory, wherein SP-ID corresponds to the user name or some similar client identification data linked to, for example, a user name.

Then, the first provider SP responds to the initial service request from the client by providing the requested service, which can be performed in a manner customized for the specific principal.

### Client

A user intending to use a service of the service provider SP sends a service request, for example, an HTTP Get by utilizing a client. Here, the client's user can, for example, select a respective link or enter a URL in its browser. In response thereto, the client receives an authentication request for example as SOAP message, from the service provider SP.

The client knows the name SP-Name of the service provider SP, typically as domain or host name. That knowledge of the client can be obtained for example from the transmitted HTTP Get or from the received SOAP message. It is possible that the client will also know the IdP-ID, for example from a direct query of the client to its user.

Then, the client blinds the service provider name SP-Name to obtain a service provider alias SP-PN. For this purpose, the client can use a memory (e.g. a table or a database) associating the service provider name SP-Name (and optionally IdP-ID) and a respective blinded service provider name SP-PN. The client can create a new service provider alias SP-PN, for example using a pseudo-random number generator, in case the memory does not provide a respective entry. As alternative, the client can use a permanently stored secret key in order to encrypt the service provider name SP-Name (and optionally IdP-ID). Result of that procedure is a service provider alias SP-PN in form of an encrypted service provider name.

Then, the client sends an authentication request to the identity provider IdP, for example as SOAP message, but utilizes the service provider alias SP-PN instead of the real service provider name SP-Name.

Subsequently, the client waits to receive an authentication response from the identity provider IdP.

In case the client needs information indicating to which service provider the authentication response from the identity provider IdP is to be sent, some options are possible. The authentication request from the client can include a session identifier, which is returned in the authentication response from the identity provider IdP on the basis of which the client can link the authentication response to the authentication request in question. For example, the client can employ a memory to associate the returned session identifier to the respective service provider. Further, it is possible that the authentication response from the identity provider IdP includes the blinded service provider name SP-PN. Then, the client can unblind the service provider alias SP-PN in view of methods used for creating the service provider alias SP-PN, for example by employing memory entries correlating the service provider name SP-Name and the respective service provider alias SP-PN or by decrypting the service provider alias SP-PN in case encryption methods have been used.

Then, the client forwards the authentication response comprising the ALIAS-ID from the identity provider IdP to the service provider SP.

### Identity provider

The identity provider IdP receives an authentication request from the client, for example, as set forth above in form of a SOAP message. The authentication request contains the blinded service provider name SP-PN.

In case, the service provider SP communicates its above mentioned trusted group identifier to the client, it is possible that the authentication request from the client includes the trusted group identifier. Then, the identity provider IdP optionally authenticates also the service provider by verifying the trusted group identifier. Here, a successful verification indicates that the authentication request from the service provider SP and the authentication request from the client, respectively, originates from a service provider belonging to a group of trusted service providers.

This procedure enhances authentication but will not reveal the identity of the service provider SP since the identity provider IdP has no access to any information identifying the service provider SP or to correlate the service provider alias SP-PN to the service provider SP.

In order to identify and, then, to authenticate the client, the identity provider IdP requests proper information to be provided from the client. This can be accomplished by requesting a user name (= IdP-ID) and/or a password.

If in a memory (for example in form of a table or database) associated to the identity provider IdP, an entry is existing for the received service provider alias SP-PN and the client identity IdP-ID, the identity provider IdP obtains a respective client alias ALIAS-ID for that client.

If that memory does not include such an entry, the identity provider IdP creates for the received service provider alias SP-PN and client identity IdP-ID a new client alias ALIAS-ID, for example by using a (pseudo-)random number generator. The newly generated client alias ALIAS-ID is then stored as new memory entry correlating the service provider alias SP-PN and the client identity IdP-ID to a respective client alias ALIAS-ID.

Then, the identity provider IdP returns an authentication response, for example, as SOAP message, to the client to assert that the client has been authenticated as ALIAS-ID. Preferably, the identity provider IdP will sign the authentication response for enhanced security.

The foregoing embodiments and the following glossary are to be considered illustrative, rather than restrictive of the invention, and those modifications which come within the meaning and range of equivalence of the claims are to be included therein.

### GLOSSARY

- SSO:: Single Sign-On
- LAP:: Liberty Alliance Project
- User:: Person
- Principal:: Entity, e.g. in a SSO system, having one or more identities; typically equivalent to a user, however, one user can be represented by one or more principals and one or more users can be represented by one principal. A principal may have different identities at different entities, e.g. a first identity SP-ID at the SP and a second identity IdP-ID at the IdP. One or more identifiers may be used to identify an identity of the principal at the respective entity. For simplicity reasons, no distinction is made in the description between the identity of the principal at the SP and the identifier that indicates the identity of the principal at the SP. Both, the identity as well as the correlated identifier is named SP-ID. The identity of the principal at the IdP and the correlated identifier is handled correspondingly, i.e. both are name IdP-ID.
- Client:: Hardware and/or software, typically a user's device and/or a webbrowser
- SP:: Service Provider, example for the second entity
- IdP:: Identity Provider, example for the third entity
- IdP-Name:: Name of IdP, example for data identifying the third entity
- IdP-ID:: Identity of the principal at the IdP, example for data identifying the first entity towards the third entity
- SP-Name:: Name of SP, example of data identifying the second entity
- SP-ID:: Identity of the principal at the SP, example for data identifying the first entity towards the second entity
- SP-PN:: Identifier, e.g. a pseudonym or alias, for a SP at an IdP, example for data characterizing the second entity towards the third entity without revealing the identity of the second entity (e.g. the SP-Name) to at least the third entity
- ALIAS-ID:: Identifier, e.g. a pseudonym or alias, for a principal at a SP, example for data characterizing the first entity towards the second entity, preferably without revealing the identity of the first entity
- Trusted group identifier:: Data indicating that an entity belongs to a group of trusted entities
- First trusted group identifier:: Data indicating that the second entity belongs to a group of trusted entities trusted by at least the third entity without revealing the identity of the second entity to at least the third entity
- Second trusted group identifier:: Data indicting that the first entity belongs to a group of trusted entities trusted by at least the third entity

## Claims

1. A method for sign-on in a network based communications environment, wherein authentication of a first entity is requested by a second entity for accessing a service to be provided by the second entity (SP) to the first entity, the authentication being provided by a third entity (IdP), **characterized in that** the method comprising the steps of:
- blinding towards the third entity (IdP) data identifying the second entity (SP) by modifying the data identifying the second entity (SP) such that the third entity (IdP) cannot infer to which entity the blinded data refers to, but the third entity (IdP) would know if blinded data that refers to the same entity is repeatedly received; and
- providing the blinded data to the third entity (IdP).

2. The method according to claim 1, being used for single sign-on in the network based communications environment.

3. The method according to claim 1 or 2, comprising the step of:
- communicating a service request from the first entity to the second entity (SP).

4. The method according to one of the preceding claims, comprising the steps of:
- communicating at least one of a first authentication request and a first trusted group identifier from the second entity (SP) to the first entity, the first authentication request being relatable by the first entity to the second entity (SP), and the first group identifier indicating a group of trusted entities the second entity (SP) belongs to.

5. The method according to one of the preceding claims, wherein blinding the data characterizing the second entity (SP) comprises at least one of the steps of:
- blinding by means of the first entity, and
- blinding by utilizing a memory associated to the first entity, and
- blinding by utilizing cryptographic techniques, and
- blinding by utilizing data identifying the second entity (SP), and
- blinding by utilizing data identifying the first entity towards the third entity (IdP).

6. The method according to one of the preceding claims, comprising the step of:
- obtaining data identifying the third entity (IdP) and communicating a second authentication request from the first entity to the third entity (IdP), the second authentication request including or being accompanied by the blinded data and the data identifying the first entity towards the third entity (IdP).

7. The method according to claim 6, wherein
the data identifying the first entity towards the third entity (IdP) is or is accompanied by a second trusted group identifier, which indicates that the first entity belongs to a group of trusted entities.

8. The method according to claim 6 or 7 as far as depending from claim 4, wherein
the second authentication request comprises or is accompanied by the first trusted group identifier.

9. The method according to one of the claims 6 to 8, comprising the step of:
- authenticating the first entity by the third entity (IdP) by using at least the data identifying the first entity towards the third entity (IdP).

10. The method according to one of the claims 7 or 9, comprising the step of:
- authenticating the first entity by the third entity (IdP) by using at least the second trusted group identifier.

11. The method according to one of the claims 6 to 10 as far as depending from claim 4, comprising the step of:
- authenticating the second entity (SP) by the third entity (IdP) by using the first trusted group identifier.

12. The method according to one of the claims 6 to 11, comprising the step of:
- obtaining by the third entity (IdP), in response to the second authentication request, data characterizing the first entity towards the second entity (SP) by utilizing the modified data and the data identifying the first entity towards the third entity (IdP).

13. The method according to one of the preceding claims, comprising the step of:
- communicating, from the third entity (IdP) to the first entity, a first authentication response comprising or being accompanied by at least the data characterizing the first entity towards the second entity (SP).

14. The method according to claim 13, comprising the step of:
- signing the first authentication response by the third entity (IdP) with a signature for authentication of the third entity (IdP) towards the second entity (SP).

15. The method according to claim 13 or 14, comprising the step of:
- communicating a second authentication response from of the first entity to the second entity (SP), the second authentication response comprising or being accompanied by the data characterizing the first entity towards the second entity (SP) and relatable by the second entity (SP) to the authentication requested by the second entity (SP).

16. The method according to one of the preceding claims, comprising the step of:
- if the second authentication response is accepted by the second entity (SP), communicating a service response from the second entity (SP) to the first entity, the service response indicating that the first entity is allowed to access the service.

17. The method according to claim 16, wherein the accepting step comprising the step of:
- obtaining by the second entity (SP) data identifying the first entity towards the second entity (SP), the data identifying the first entity towards the second entity (SP) being related to the data characterizing the first entity towards the second entity (SP).

18. A computer program product comprising software code portions for carrying out the steps according to one of claims 1 to 17 when the computer program product is run on a computing device.

19. An entity for use in a sign-on in a network based communications environment, the entity being adapted to:
- receive an authentication request from a second entity (SP) for accessing a service to be provided to the entity by the second entity (SP), the authentication request being directed to authentication of the entity by a third entity (IdP) and comprising data identifying the second entity (SP);
**characterized in that** the entity being further adapted to:
- blind towards the third entity (IdP) data identifying the second entity (SP) by modifying the data identifying the second entity (SP) such that the third entity (IdP) cannot infer to which entity the blinded data refers to, but the third entity (IdP) would know if blinded data that refers to the same entity is repeatedly received; and
- send the blinded data to the third entity (IdP).

20. The entity according to claim 19, being adapted to be operated as first entity of which authentication is requested by the second entity (SP).

21. The entity according to claim 19 or 20, being a computer based unit.

22. The entity according to claim 21, comprising a receiving unit for receiving the authentication request.

23. The entity according to claim 21 or 22, comprising a processing unit for modifying the data identifying the second entity (SP).

24. The entity according to claims 21 to 23, comprising a transmission unit for sending the blinded data to the third entity (IdP).

25. A communications environment comprising:
- a first entity,
- a second entity (SP) adapted to request authentication of the first entity for accessing a service to be provided by the second entity (SP) to the first entity,
- a third entity (IdP) adapted to provide authentication of the first entity, and
- a network for communications between the first, second and third entities,
**characterized in that**
- the first entity is the entity according to one of the claims 19 to 24.

26. The communications environment according to claim 25, wherein
- the first, second and third entities are operated as set forth in claim 20.

## Patentansprüche

1. Verfahren zum Anmelden in einer netzwerkbasierten Datenübertragungsumgebung, wobei Authentifikation einer ersten Entität von einer zweiten Entität angefordert wird, um auf einen Dienst zuzugreifen, der von der zweiten Entität (SP) für die erste Entität bereitgestellt werden soll, wobei die Authentifikation durch eine dritte Entität (IdP) bereitgestellt wird, **dadurch gekennzeichnet, dass** das Verfahren die folgenden Schritte umfasst:
- Kaschieren gegenüber der dritten Entität (IdP) von Daten, welche die zweite Entität (SP) identifizieren, indem die Daten modifiziert werden, welche die zweite Entität (SP) identifizieren, so dass die dritte Entität (IdP) nicht ableiten kann, auf welche Entität sich die kaschierten Daten beziehen, die dritte Entität (IdP) aber erkennen würde, wenn kaschierte Daten, die sich auf die gleiche Entität beziehen, wiederholt empfangen werden; und
- Bereitstellen der kaschierten Daten für die dritte Entität (IdP).

2. Verfahren nach Anspruch 1, das für Einmalanmeldung in der netzwerkbasierten Datenübertragungsumgebung verwendet wird.

3. Verfahren nach Anspruch 1 oder 2, umfassend den Schritt des:
- Übertragens einer Dienstanforderung von der ersten Entität zu der zweiten Entität (SP).

4. Verfahren nach einem der vorhergehenden Ansprüche, umfassend die Schritte des:
- Übertragens von wenigstens einem von einer ersten Authentifikationsanforderung und einer ersten vertrauenswürdigen Gruppenkennung von der zweiten Entität (SP) zu der ersten Entität, wobei die erste Authentifikationsanforderung von der ersten Entität zu der zweiten Entität (SP) zuordenbar ist, und die erste vertrauenswürdige Gruppenkennung eine Gruppe von vertrauenswürdigen Entitäten angibt, zu welcher die zweite Entität (SP) gehört.

5. Verfahren nach einem der vorhergehenden Ansprüche, wobei Kaschieren der Daten, welche die zweite Entität (SP) charakterisieren, wenigstens einen der folgenden Schritt umfasst:
- Kaschieren durch Mittel der ersten Entität, und
- Kaschieren unter Verwendung eines Speichers, der mit der ersten Entität verknüpft ist, und
- Kaschieren unter Verwendung von kryptografischen Techniken, und
- Kaschieren unter Verwendung von Daten, welche die zweite Entität (SP) identifizieren, und
- Kaschieren unter Verwendung von Daten, welche die erste Entität gegenüber der dritten Entität (IdP) identifizieren.

6. Verfahren nach einem der vorhergehenden Ansprüche, umfassend den Schritt des:
- Erhaltens von Daten, welche die dritte Entität (IdP) identifizieren, und Übertragen einer zweiten Authentifikationsanforderung von der ersten Entität zu der dritten Entität (IdP), wobei die zweite Authentifikationsanforderung die kaschierten Daten und die Daten, welche die erste Entität gegenüber der dritten Entität (IdP) identifizieren, enthält oder von diesen begleitet wird.

7. Verfahren nach Anspruch 6, wobei die Daten, welche die erste Entität gegenüber der dritten Entität (IdP) identifizieren, eine zweite vertrauenswürdige Gruppenkennung sind oder von dieser begleitet werden, welche angibt, dass die erste Entität zu einer Gruppe von vertrauenswürdigen Entitäten gehört.

8. Verfahren nach Anspruch 6 oder 7, soweit es von Anspruch 4 abhängt, wobei die zweite Authentifikationsanforderung die erste vertrauenswürdige Gruppenkennung umfasst oder von dieser begleitet wird.

9. Verfahren nach einem der Ansprüche 6 bis 8, umfassend den Schritt des:
- Authentifizierens der ersten Entität durch die dritte Entität (IdP) unter Verwendung von wenigstens den Daten, welche die erste Entität gegenüber der dritten Entität (IdP) identifizieren.

10. Verfahren nach einem der Ansprüche 7 oder 9, umfassend den Schritt des:
- Authentifizierens der ersten Entität durch die dritte Entität (IdP) unter Verwendung von wenigstens der zweiten vertrauenswürdigen Gruppenkennung.

11. Verfahren nach einem der Ansprüche 6 bis 10, soweit es von Anspruch 4 abhängt, umfassend den Schritt des:
- Authentifizierens der zweiten Entität (SP) durch die dritte Entität (IdP) unter Verwendung der ersten vertrauenswürdigen Gruppenkennung.

12. Verfahren nach einem der Ansprüche 6 bis 11, umfassend den Schritt des:
- Erhaltens durch die dritte Entität (IdP), in Reaktion auf die zweite Authentifikationsanforderung, von Daten, welche die erste Entität gegenüber der zweiten Entität (SP) charakterisieren unter Verwendung der modifizierten Daten und der Daten, welche die erste Entität gegenüber der dritten Entität (IdP) identifizieren.

13. Verfahren nach einem der vorhergehenden Ansprüche, umfassend den Schritt des:
- Übertragens, von der dritten Entität (IdP) zu der ersten Entität, einer ersten Authentifikationsantwort, welche wenigstens die Daten enthält, welche die erste Entität gegenüber der zweiten Entität (SP) charakterisieren, oder von diesen begleitet wird.

14. Verfahren nach Anspruch 13, umfassend den Schritt des:
- Signierens der ersten Authentifikationsantwort durch die dritte Entität (IdP) mit einer Signatur zur Authentifikation der dritten Entität (IdP) gegenüber der zweiten Entität (SP).

15. Verfahren nach Anspruch 13 oder 14, umfassend den Schritt des:
- Übertragens einer zweiten Authentifikationsantwort von der ersten Entität zu der zweiten Entität (SP), wobei die zweite Authentifikationsantwort die Daten enthält oder von diesen begleitet wird, welche die erste Entität gegenüber der zweiten Entität (SP) charakterisieren und von der zweiten Entität (SP) zu der Authentifikation zuordenbar sind, die von der zweiten Entität (SP) angefordert wurde.

16. Verfahren nach einem der vorhergehenden Ansprüche, umfassend den Schritt des:
- wenn die zweite Authentifikationsantwort von der zweiten Entität (SP) akzeptiert wird. Übertragens einer Dienstantwort von der zweiten Entität (SP) zu der ersten Entität, wobei die Dienstantwort angibt, dass es der ersten Entität gestattet ist, auf den Dienst zuzugreifen.

17. Verfahren nach Anspruch 16, wobei der Akzeptierungsschritt den folgenden Schritt umfasst:
- Erhalten durch die zweite Entität (SP) von Daten, welche die erste Entität gegenüber der zweiten Entität (SP) identifizieren, wobei die Daten, welche die erste Entität gegenüber der zweiten Entität (SP) identifizieren, mit den Daten in Beziehung stehen, welche die erste Entität gegenüber der zweiten Entität (SP) charakterisieren.

18. Computerprogramm-Produkt, umfassend Software-Code-Abschnitte zum Ausführen der Schritte gemäß einem von den Ansprüchen 1 bis 17, wenn das Computerprogramm-Produkt auf einer Rechenvorrichtung ausgeführt wird.

19. Entität zur Verwendung in einer Anmeldung in einer netzwerkbasierten Datenübertragungsumgebung, wobei die Entität ausgelegt ist zum:
- Empfangen einer Authentifikationsanforderung von einer zweiten Entität (SP) zum Zugreifen auf einen Dienst, der für die Entität von der zweiten Entität (SP) bereitgestellt werden soll, wobei die Authentifikationsanforderung zur Authentifizierung der Entität an eine dritte Entität (IdP) gerichtet ist und Daten umfasst, welche die zweite Entität (SP) identifizieren;
**dadurch gekennzeichnet, dass** die Entität des Weiteren ausgelegt ist zum:
- Kaschieren gegenüber der dritten Entität (IdP) von Daten, welche die zweite Entität (SP) identifizieren, indem die Daten, welche die zweite Entität (SP) identifizieren, so modifiziert werden, dass die dritte Entität (IdP) nicht ableiten kann, auf welche Entität sich die kaschierten Daten beziehen, die dritte Entität (IdP) aber erkennen würde, wenn kaschierte Daten, die sich auf die gleiche Entität beziehen, wiederholt empfangen werden; und
- Senden der kaschierten Daten zu der dritten Entität (IdP).

20. Entität nach Anspruch 19, die so ausgelegt ist, dass sie als erste Entität betrieben werden kann, von welcher Authentifikation von der zweiten Entität (SP) angefordert wird.

21. Entität nach Anspruch 19 oder 20, die eine computerbasierte Einheit ist.

22. Entität nach Anspruch 21, umfassend eine Empfangseinheit zum Empfangen der Authentifikationsanforderung.

23. Entität nach Anspruch 21 oder 22, umfassend eine Verarbeitungseinheit zum Modifizieren der Daten, welche die zweite Entität (SP) identifizieren.

24. Entität nach den Ansprüchen 21 bis 23, umfassend eine Sendeeinheit zum Senden der kaschierten Daten zu der dritten Entität (IdP).

25. Datenübertragungsumgebung, umfassend:
- eine erste Entität,
- eine zweite Entität (SP), die so ausgelegt ist, dass sie Authentifikation der ersten Entität für das Zugreifen auf einen Dienst anfordert, der von der zweiten Entität (SP) für die erste Entität bereitgestellt werden soll,
- eine dritte Entität (IdP), die so ausgelegt ist, dass sie Authentifikation der ersten Entität bereitstellt, und
- ein Netzwerk von Datenübertragungen zwischen der ersten, der zweiten und der dritten Entität,
**dadurch gekennzeichnet, dass**
- die erste Entität die Entität gemäß einem der Ansprüche 19 bis 24 ist.

26. Datenübertragungsumgebung nach Anspruch 25, wobei:
- die erste, die zweite und die dritte Entität wie in Anspruch 20 dargelegt betrieben werden.

## Revendications

1. Procédé d'authentification (sign-on) dans un environnement de communication basé sur un réseau, dans lequel l'authentification d'une première entité est demandée par une seconde entité afin d'accéder à un service qui doit être fourni par la seconde entité (SP) à la première entité, l'authentification étant fournie par une troisième entité (IdP), **caractérisé en ce que** le procédé comprend les étapes consistant à :
- masquer dans la direction de la troisième entité (IdP) les données identifiant la seconde entité (SP) en modifiant les données identifiant la seconde entité (SP), de telle sorte que la troisième entité (IdP) ne puisse pas déduire à quelle entité les données masquées font référence mais la troisième entité (IdP) saurait si les données masquées qui font référence à la même entité sont reçues de manière répétitive ; et
- fournir les données masquées à la troisième entité (IdP).

2. Procédé selon la revendication 1, étant utilisé pour une authentification unique (single sign-on) dans l'environnement de communication basé sur un réseau.

3. Procédé selon la revendication 1 ou 2, comprenant l'étape consistant à :
- communiquer une demande de service de la première entité à la seconde entité (SP).

4. Procédé selon une des revendications précédentes, comprenant les étapes consistant à :
- communiquer au moins un d'une première demande d'authentification et d'un premier identifiant de groupe de confiance de la seconde entité (SP) à la première entité, la première demande d'authentification étant mise en relation avec la seconde entité (SP) par la première entité, et le premier identifiant de groupe indiquant un groupe d'entités de confiance auquel la seconde entité (SP) appartient.

5. Procédé selon l'une des revendications précédentes, dans lequel le masquage des données caractérisant la seconde entité (SP) comprend au moins une des étapes de:
- masquage au moyen d'une première entité, et
- masquage en utilisant une mémoire associée à la première entité, et
- masquage en utilisant des techniques cryptographiques, et
- masquage en utilisant des données identifiant la seconde entité (SP), et
- masquage en utilisant des données identifiant la première entité dans la direction de la troisième entité (IdP).

6. Procédé selon une des revendications précédentes, comprenant l'étape consistant à :
- obtenir des données identifiant la troisième entité (IdP) et communiquer une seconde demande d'authentification de la première entité à la troisième entité (IdP), la seconde demande d'authentification incluant ou étant accompagnée par les données masquées et les données identifiant la première entité dans la direction de la troisième entité (IdP).

7. Procédé selon la revendication 6, dans lequel
les données identifiant la première entité dans la direction de la troisième entité (IdP) sont, ou sont accompagnées par, un second identifiant de groupe de confiance, qui indique que la première entité appartient à un groupe d'entités de confiance.

8. Procédé selon la revendication 6 ou 7 dans la mesure où elles dépendent de la revendication 4, dans lequel
la seconde demande d'authentification comprend ou est accompagnée par le premier identifiant de groupe de confiance.

9. Procédé selon une des revendications 6 à 8, comprenant l'étape consistant à :
- authentifier la première entité par la troisième entité (IdP) en utilisant au moins les données identifiant la première entité dans la direction de la troisième entité (IdP).

10. Procédé selon une des revendications 7 ou 9, comprenant l'étape consistant à :
- authentifier la première entité par la troisième entité (IdP) en utilisant au moins le second identifiant de groupe de confiance.

11. Procédé selon une des revendications 6 à 10 dans la mesure où elles dépendent de la revendication 4, comprenant l'étape consistant à :
- authentifier la seconde entité (SP) par la troisième entité (IdP) en utilisant le premier identifiant de groupe de confiance.

12. Procédé selon une des revendications 6 à 11, comprenant l'étape consistant à :
- obtenir par la troisième entité (IdP), en réponse à la seconde demande d'authentification, des données caractérisant la première entité dans la direction de la seconde entité (SP) en utilisant les données modifiées et les données identifiant la première entité dans la direction de la troisième entité (IdP).

13. Procédé selon une des revendications précédentes, comprenant l'étape consistant à :
- communiquer, de la troisième entité (IdP) à la première entité, une première réponse d'authentification comprenant ou étant accompagnée par au moins les données caractérisant la première entité dans la direction de la seconde entité (SP).

14. Procédé selon la revendication 13, comprenant l'étape consistant à :
- signer la première réponse d'authentification par la troisième entité (IdP) avec une signature d'authentification de la troisième entité (IdP) dans la direction de la seconde entité (SP).

15. Procédé selon la revendication 13 ou 14, comprenant l'étape consistant à :
- communiquer une seconde réponse d'authentification de la première entité à la seconde entité (SP), la seconde réponse d'authentification comprenant ou étant accompagnée par les données caractérisant la première entité dans la direction de la seconde entité (SP) et étant mise en relation par la seconde entité (SP) avec l'authentification demandée par la seconde entité (SP).

16. Procédé selon une des revendications précédentes, comprenant l'étape consistant à :
- si la seconde réponse d'authentification est acceptée par la seconde entité (SP), communiquer une réponse de service de la seconde entité (SP) à la première entité, la réponse de service indiquant que la première entité est autorisée à accéder au service.

17. Procédé selon la revendication 16, dans lequel l'étape d'acceptation comprend l'étape consistant à :
- obtenir par la seconde entité (SP) des données identifiant la première entité dans la direction de la seconde entité (SP), les données identifiant la première entité dans la direction de la seconde entité (SP) étant en relation avec les données caractérisant la première entité dans la direction de la seconde entité (SP).

18. Produit de programme informatique comprenant des portions de code logiciel pour effectuer les étapes selon une des revendications 1 à 17 lorsque le produit de programme informatique est exécuté sur un dispositif informatique.

19. Entité à utiliser dans le cadre d'une authentification dans un environnement de communication basé sur un réseau, l'entité étant adaptée afin de :
- recevoir une demande d'authentification d'une seconde entité (SP) afin d'accéder à un service qui doit être fourni à l'entité par la seconde entité (SP), la demande d'authentification ayant pour but l'authentification de l'entité par une troisième entité (IdP) et comprenant des données identifiant le seconde entité (SP) ;
**caractérisé en ce que** l'entité est en outre adaptée pour :
- masquer dans la direction de la troisième entité (IdP) des données identifiant la seconde entité (SP) en modifiant les données identifiant la seconde entité (SP) de telle sorte que la troisième entité (IdP) ne puisse pas déduire à quelle entité les données masquées font référence mais la troisième entité (IdP) saurait si les données masquées qui font référence à la même entité sont reçues de manière répétitive ; et
- envoyer les données masquées à la troisième entité (IdP).

20. Entité selon la revendication 19, étant adaptée afin de fonctionner comme première entité dont l'authentification est demandée par la seconde entité (SP).

21. Entité selon la revendication 19 ou 20, étant une unité informatique.

22. Entité selon la revendication 21, comprenant une unité de réception pour recevoir la demande d'authentification.

23. Entité selon la revendication 21 ou 22, comprenant une unité de traitement pour modifier les données identifiant la seconde entité (SP).

24. Entité selon les revendications 21 à 23, comprenant une unité d'émission pour envoyer les données masquées à la troisième entité (IdP).

25. Environnement de communication comprenant :
- une première entité,
- une seconde entité (SP) adaptée afin de demander l'authentification de la première entité afin d'accéder à un service qui doit être fourni par la seconde entité (SP) à la première entité ;
- une troisième entité (IdP) adaptée afin de fournir l'authentification de la première entité, et
- un réseau de communication entre les première, seconde et troisième entités, **caractérisé en e que**
- la première entité est l'entité selon une des revendications 19 à 24.

26. Environnement de communication selon la revendication 25, dans lequel
- les première, seconde et troisième entités fonctionnent de la manière décrite à la revendication 20.
